# EUROPÄISCHE PATENTANMELDUNG

(11) **EP 4 368 595 A1**
(43) Veröffentlichungstag der Anmeldung: **15.05.2024**
(21) Anmeldenummer: 22206813.2
(22) Anmeldetag: 10.11.2022
(51) Int. Cl.: C04B 28/06, C04B 28/14, C04B 111/28

(54) **VERFAHREN ZUR HERSTELLUNG EINES DÄMMELEMENTS**

(71) Anmelder: STO SE & Co. KGaA, 79780 Stühlingen (DE)
(72) Erfinder: Hitzler, Martin, 78244 Gottmadingen (DE); Fraunhoffer, Dominik, 78166 Donaueschingen (DE); Hirsch, Thomas, 78199 Bräunlingen (DE); Paucksch, Melanie, 82335 Berg (DE); Reiff, Jona, 78054 Villingen-Schwenningen (DE); Holzer, Michael, 78315 Radolfzell (DE); Sadrina, Frank, 79780 Stühlingen (DE)
(74) Vertreter: Gottschalk, Matthias

(57) **Zusammenfassung**

Die Erfindung betrifft ein Verfahren zur Herstellung eines Dämmelements, umfassend die Schritte:
a) Bereitstellen einer Zusammensetzung, enthaltend
- ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
- Wasser sowie
- Zusatzstoffe, die Luftporenbildner, Schaumstabilisatoren und Hydrophobierungsmittel umfassen,

b) Aufschäumen der Zusammensetzung, vorzugsweise mit Hilfe eines Rühr- und/oder Mischaggregats,
c) Bereitstellen geschäumter und/oder geblähter Polymer-Partikel und Mischen der geschäumten und/oder geblähten Polymer-Partikel mit der aufgeschäumten Zusammensetzung,
d) Eingeben der Mischung aus aufgeschäumter Zusammensetzung und geschäumter und/oder geblähter Polymer-Partikel in eine Form und
e) Trocknen und/oder Härten der aufgeschäumten Zusammensetzung.

## Beschreibung

Die Erfindung betrifft ein Verfahren zur Herstellung eines Dämmelements. Bei dem Dämmelement kann es sich insbesondere um eine zur Schall- und/oder Wärmedämmung einsetzbare Dämmplatte handeln, beispielsweise zur Ausbildung einer Wärmedämmschicht in einem Wärmedämmverbundsystem. Darüber hinaus sind weitere Anwendungsbereiche möglich. Je nach Anwendungsbereich kann die Form des Dämmelements variieren, so dass das Dämmelement in Nischen, Laibungen, Ecken und/oder an Kanten einsetzbar ist.

### Stand der Technik

Dämmelemente zur Schall- und/oder Wärmedämmung von Gebäuden können aus den unterschiedlichsten Dämmstoffen hergestellt sein. Häufig jedoch, insbesondere im Fassadenbereich, finden Dämmelemente aus einem Polymerschaum, insbesondere aus expandiertem Polystyrol oder expandiertem Polyurethan, Einsatz. Denn diese weisen nicht nur gute Dämmwerte auf, sondern sind zudem vergleichsweise kostengünstig herzustellen. Die guten Dämmwerte sind vorrangig auf die luft- bzw. gasgefüllten Poren bzw. Zellen zurückzuführen, die beim Schäumen ausgebildet werden. Als nachteilig erweist sich jedoch das Brandverhalten dieser Dämmstoffe, so dass immer dann, wenn es erhöhte Anforderungen aus Sicht des Brandschutzes zu erfüllen gilt, andere, nicht brennbare Dämmstoffe zum Einsatz gelangen.

Derartige nicht brennbare Dämmstoffe sind zahlreich erhältlich. Bekannt sind insbesondere Dämmstoffe aus Mineralfasern, wie beispielsweise Glas- oder Steinwolle, oder aus Mineralschäumen. Dämmstoffe aus Mineralfasern weisen allerdings den Nachteil auf, dass bei der Verarbeitung Fasern freigesetzt werden, die in die Atemwege gelangen können. Dämmstoffe aus Mineralschäumen wiederum sind spröde und weisen eine geringe Scherfestigkeit auf, so dass es häufig zu Materialausbrüchen kommt. Im Vergleich zu anderen Dämmstoffen weisen Mineralschäume zudem nur mäßig gute Wärmedämmeigenschaften auf, da die Wärmeleitfähigkeit oftmals über 0,05 W/(m^{∗}K) liegt. Als kritisch erweist sich auch die hohe Wasseraufnahmefähigkeit typischer Mineralschäume. Trotz preiswerter Rohstoffe ist der Marktpreis von Mineralschäumen vergleichsweise hoch. Denn die Herstellung erfolgt in einem aufwendigen Hydrothermalprozess, um die erforderlichen mechanischen Festigkeiten zu erreichen. Technisch wird hierzu ein zeit- und kostenintensives Autoklavenverfahren eingesetzt.

Die vorliegende Erfindung ist mit der Aufgabe befasst, ein neuartiges Dämmelement bereitzustellen, das gegenüber den bekannten Polymerschäumen verbesserte Brandschutzeigenschaften und gegenüber den bekannten Mineralschäumen verbesserte Wärmedämmeigenschaften aufweist. Des Weiteren soll die Herstellung eines solchen Dämmelements vereinfacht werden, um die Herstellungskosten zu senken.

Zur Lösung der Aufgabe wird das Verfahren mit den Merkmalen des Anspruchs 1 vorgeschlagen. Vorteilhafte Weiterbildungen des erfindungsgemäßen Verfahrens sind den Unteransprüchen zu entnehmen.

### Offenbarung der Erfindung

Das vorgeschlagene Verfahren zur Herstellung eines Dämmelements umfasst die folgenden Schritte:
a) Bereitstellen einer Zusammensetzung, enthaltend
   - ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
   - Wasser sowie
   - Zusatzstoffe, die Luftporenbildner, Schaumstabilisatoren und Hydrophobierungsmittel umfassen,
b) Aufschäumen der Zusammensetzung, vorzugsweise mit Hilfe eines Rühr- und/oder Mischaggregats,
c) Bereitstellen geschäumter und/oder geblähter Polymer-Partikel und Mischen der geschäumten und/oder geblähten Polymer-Partikel mit der aufgeschäumten Zusammensetzung,
d) Eingeben der Mischung aus aufgeschäumter Zusammensetzung und geschäumter und/oder geblähter Polymer-Partikel in eine Form und
e) Trocknen und/oder Härten der aufgeschäumten Zusammensetzung.

Die vorgeschlagene Zusammensetzung enthält sowohl mineralische als auch organische Bindemittelkomponenten. Es liegt somit ein "hybrides" Bindemittelsystem vor. Das hybride Bindemittelsystem hat den Vorteil, dass ein aus einer entsprechenden Zusammensetzung hergestelltes Dämmelement die Vorteile mineralisch gebundener sowie organisch gebundener Dämmstoffe in sich vereint. Hier sind insbesondere die Nichtbrennbarkeit mineralisch gebundener Dämmstoffe und die Elastizität organisch gebundener Dämmstoffe zu nennen. "Elastizität" bedeutet, dass das Dämmelement weniger spröde und bruchanfällig ist, insbesondere im Vergleich zu einem Dämmelement aus einem herkömmlichen Mineralschaum.

Darüber hinaus enthält die vorgeschlagene Zusammensetzung Luftporenbildner und Schaumstabilisatoren als Zusatzstoffe. Diese - in Kombination mit dem hybriden Bindemittelsystem - tragen dazu bei, dass die Zusammensetzung aufschäumbar ist.

Das Aufschäumen dient dem Einbringen von Luftporen, die zu einer Verbesserung der Wärmedämmeigenschaften eines nach dem vorgeschlagenen Verfahren hergestellten Dämmelements beitragen. Als besonders vorteilhaft erweist sich dabei, dass die Zusammensetzung rein physikalisch aufgeschäumt werden kann, beispielsweise durch einfaches Rühren, sowohl maschinengestützt, als auch händisch. Alternativ können die Luftporen in einer chemischen Treibreaktion eingebracht werden. Das heißt, dass - im Unterschied zu herkömmlichen Mineralschäumen - auf ein aufwendiges und kostenintensives Autoklavierungsverfahren zur Erlangung der geforderten chemisch-physikalischen sowie thermisch-hygrischen Eigenschaften verzichtet werden kann. Dadurch können die Herstellungskosten gesenkt werden.

Das ferner als Zusatzstoff enthaltene Hydrophobierungsmittel hat die Aufgabe die Wasseraufnahme zu regeln. Bei der Auswahl des Hydrophobierungsmittels ist dabei darauf zu achten, dass dieses aufschäumbar sowie schaumkompatibel ist.

Der aufgeschäumten Zusammensetzung werden in Schritt c) geschäumte und/oder geblähte Polymer-Partikel als Leichtfüllstoffe zugegeben. Dadurch können die Wärmedämmeigenschaften eines hieraus hergestellten Dämmelements weiter verbessert werden. Ferner können die Rohstoffkosten gesenkt werden, da geschäumte und/oder geblähte Polymer-Partikel, wie beispielsweise expandiertes Polystyrol, vergleichsweise preiswert sind. Als weiterer Vorteil ist zu nennen, dass durch die Zugabe des Leichtfüllstoffs die Rohdichte und das Gewicht des Dämmelements gesenkt werden, so dass das Dämmelement einfach zu handhaben ist.

Die Mischung aus aufgeschäumter Zusammensetzung und geschäumten und/oder geblähten Polymer-Partikeln wird zur Formgebung in eine Form gegeben und getrocknet bzw. ausgehärtet. Da ein Teil des in der Zusammensetzung enthaltenen Wassers mit den ferner enthaltenen mineralischen Bindemittelkomponenten reagiert, findet nicht nur ein Trocknungs-, sondern auch ein Abbinde- bzw. Härtungsprozess statt.

Das hybride Bindemittelsystem der in dem Verfahren verwendeten Zusammensetzung enthält Portlandzement und Calciumaluminatzement als mineralische Bindemittelkomponenten. In dieser zementösen Bindemittelmischung trägt der Calciumaluminatzement zu einem beschleunigten Abbindeverhalten bei. Über die jeweiligen Anteile in der Bindemittelmischung können demnach die Reaktivität und die Frühfestigkeit geregelt werden.

Bei dem Portlandzement handelt es sich vorzugsweise um Portlandzement nach EN 197. Die besten Ergebnisse konnten mit einem Portlandzement CEM I 52,5 R erzielt werden. Als Calciumaluminatzement wird vorzugsweise amorpher Calciumaluminatzement verwendet. Optional kann ferner Tonerdezement enthalten sein, der nachfolgend - zur besseren Unterscheidung vom amorphen Calciumaluminatzement - auch als kristalliner Calciumaluminatzement bezeichnet wird. Der amorphe Calciumaluminatzement führt im Vergleich mit den kristallinen Calciumaluminatphasen der Tonerdezemente zu einer erhöhten Reaktivität der Mischung und somit zu einer besseren Gefüge- und Feuchtigkeitsstabilität der Zusammensetzung.

Über die jeweiligen Bindemittelanteile in der zementösen Bindemittelmischung können die Reaktivität sowie die Früh- und Endfestigkeit der Zusammensetzung gesteuert werden. Auf diese Weise kann auch auf die offene Zeit der Zusammensetzung bei der Herstellung des Dämmelements Einfluss genommen werden. Durch Variation der Anteile der enthaltenen mineralischen Bindemittelkomponenten kann die offene Zeit den jeweiligen Bedürfnissen und/oder Maschinenanforderungen optimal angepasst werden.

In Weiterbildung der Erfindung wird daher vorgeschlagen, dass in Schritt a) eine Zusammensetzung bereitgestellt wird, die zusätzlich Tonerdezement enthält. Durch Zugabe von Tonerdezement bzw. kristallinem Calciumaluminatzement (siehe oben) können die Material- und Verarbeitungseigenschaften der Zusammensetzung optimal eingestellt werden.

Alternativ oder ergänzend wird vorgeschlagen, dass in Schritt a) eine Zusammensetzung bereitgestellt wird, die einen Sulfatträger, vorzugsweise Calciumsulfat (CaSO4), enthält. Das Zusetzen eines Sulfatträgers führt bei der Hydratation der zementösen Bindemittelmischung zur Ettringitbildung. Durch den hohen Kristallwassergehalt von Ettringit kommt es zu einer erhöhten Wasserbindung und zugleich zu einer Volumenzunahme. Der hohe Wasseranteil unterstützt die Nichtbrennbarkeit des aus der Zusammensetzung hergestellten Dämmelements. Als Sulfatträger kann insbesondere Calciumsulfat in Form von Anhydrit, Hemi- oder Dihydrat sowie Mischungen davon enthalten sein.

In Schritt a) wird vorzugsweise eine Zusammensetzung bereitgestellt, die
- 1 - 45 Gew.-% Polymerbindemittel,
- 1 - 50 Gew.-% Portlandzement,
- 0,5 - 30 Gew.-% amorpher Calciumaluminatzement,
- 0 - 35 Gew.-% Tonerdezement,
- 0 - 20 Gew.-% Sulfatträger
- 20 - 40 Gew.-% Wasser,
- 0,01 - 5,0 Gew.-% Luftporenbildner,
- 0,1 - 20,0 Gew.-% Schaumstabilisatoren,
- 0,01 - 5,0 Gew.-% Hydrophobierungsmittel,
- 0 - 35 Gew.-% weitere Additive
jeweils bezogen auf das Gesamtgewicht der Ausgangsstoffe der Zusammensetzung enthält. Das heißt, dass optional weitere Additive enthalten sein können. Bei den weiteren Additiven kann es sich beispielsweise um Dispergiermittel und/oder die Rheologie der Zusammensetzung beeinflussende Additive handeln.

Die oben angegebenen Bereiche können weiter eingeschränkt werden, so dass sich die nachfolgend genannten "bevorzugten / besonders bevorzugten" Bereiche ergeben, und zwar jeweils bezogen auf das Gesamtgewicht der Ausgangsstoffe der Zusammensetzung:

| | |
|---|---|
| 10,0 - 35,0 Gew.-% / 15,0 - 25,0 Gew.-% | Polymerbindemittel, |
| 10,0 - 40,0 Gew.-% / 15,0 - 35,0 Gew.-% | Portlandzement, |
| 3,0 - 20,0 Gew.-% / 5,0 - 10,0 Gew.-% | Calciumaluminatzement, insbesondere amorpher Calciumaluminatzement, |
| 3,0 - 20 Gew.-% / 5,0 - 15,0 Gew.-% | Tonerdezement, sofern enthalten, |
| 1,0 - 15,0 Gew.-% / 2,0 - 10,0 Gew.-% | Sulfatträgers, sofern enthalten, |
| 0,1 - 3,0 Gew.-% / 0,2 - 2,0 Gew.-% | Luftporenbildner, |
| 0,3 - 15,0 Gew.-% / 0,5 - 10,0 Gew.-% | Schaumstabilisatoren, |
| 0,1 - 3,0 Gew.-% / 0,2 - 2,0 Gew.-% | Hydrophobierungsmittel, |

Bevorzugt wird ein Polymerbindemittel auf Basis von Vinylacetat/EthylenCopolymeren, Copolymeren auf Basis von Vinylaromaten, insbesondere Styrol, und Acrylaten und/oder Homo- oder Copolymeren auf Basis von Reinacrylaten, bevorzugt Copolymere aus Vinylacetat-Ethylen, Acrylsäureester-Acrylnitril, Acryl-/Methacrylsäureester, Styrol-Butylacrylat und/oder Acrylat-Homopolymer als organische Bindemittelkomponente verwendet.

Die organischen Bindemittelkomponenten werden zweckmäßigerweise in Form einer wässrigen Polymerdispersion eingesetzt. Der Feststoffgehalt der wässrigen

Bindemitteldispersion beträgt vorzugsweise 30 - 65 Gew.-%, weiterhin vorzugsweise 40 - 62 Gew.-%, besonders bevorzugt 45 - 62 Gew.-%.

Ferner bevorzugt wird in Schritt a) eine Zusammensetzung bereitgestellt, die Luftporenbildner aus der Gruppe der anionischen Tenside, vorzugsweise anionische Tenside auf Basis von Fettsäurederivaten, insbesondere Laurylethersulfaten oder Oleinsulfonaten, als Zusatzstoff enthält.

Weiterhin bevorzugt wird in Schritt a) eine Zusammensetzung bereitgestellt, die Schaumstabilisatoren aus der Gruppe kolloidales Kieselsol, insbesondere amorphes kolloidales Kieselsol oder epoxysilanmodifizierte kolloidale Kieselerde, Alkohole, Glycole, beispielsweise Ethylenglycol, Glycolether, beispielsweise Butylglycol, Butyldiglycol und Propylenglycol-monoalkylether, oder Polyglycolether, insbesondere Polyethylenglycolmonoalkylether, bevorzugt amorphes kolloidales Kieselsol oder epoxysilanmodifizierte kolloidale Kieselerde, als Zusatzstoff enthält. Während die meisten der vorstehend genannten Schaumstabilisatoren aus der Literatur bekannt sind, hat sich überraschenderweise gezeigt, dass auch epoxysilanmodifizierte kolloidale Kieselerde schaumstabilisierend wirken können.

Des Weiteren bevorzugt wird in Schritt a) eine Zusammensetzung bereitgestellt, die Hydrophobierungsmittel aus der Gruppe der Alkali- und Erdalkaliseifen langkettiger Fettsäuren wie Oleate, Stearate oder Laurate, Silikonharze oder Polysiloxane als Zusatzstoff enthält.

Zum Aufschäumen der Zusammensetzung in Schritt b) wird vorzugsweise die Zusammensetzung gerührt, bis eine Nass-Schaumdichte < 600 g/L, vorzugsweise < 500 g/L, weiterhin vorzugsweise < 300 g/L, erreicht ist. Je geringer die Nass-Schaumdichte ist, desto größer ist der Anteil der Luftporen in der Zusammensetzung sowie im herzustellenden Dämmelement. Über die Nass-Schaumdichte können demnach die Wärmedämmeigenschaften des späteren Dämmelements eingestellt werden. Um festzustellen, ob die gewünschte Nass-Schaumdichte erreicht ist, kann eine definierte Volumenmenge der aufgeschäumten Zusammensetzung entnommen und ausgewogen werden. Der Quotient aus Masse und Volumen ergibt dann die Nass-Schaumdichte.

Es ist allgemein bekannt, dass Feststoffe in Pulverform den Aufbau einer Schaumstruktur stören und/oder eine bereits aufgebaute Schaumstruktur mechanisch zerstören können. Die Verwendung einer erfindungsgemäßen Zusammensetzung, die sowohl flüssige als auch pulverförmige Bestandteile enthält, führt jedoch zu stabilen Schaumstrukturen, die nicht kollabieren.

Überraschend ist zudem, dass die gewählten Zusatzstoffe bzw. die gewählte Kombination aus oberflächenaktiven Verbindungen den Aufbau der Schaumstruktur nicht stören. Für den Fachmann ist in diesem Zusammenhang insbesondere der Einfluss des Hydrophobierungsmittels nicht abschätzbar. Überraschenderweise kommt es nicht zu porenzerstörenden Wechselwirkungen zwischen den Luftporenbildnern und den Schaumstabilisatoren auf der einen Seite und dem Hydrophobierungsmittel auf der anderen Seite.

Gemäß einer ersten bevorzugten Ausführungsform der Erfindung werden in Schritt b) die flüssigen Bestandteile, insbesondere das Wasser und die Polymerdispersion, vorgelegt und die pulverförmigen Bestandteile, insbesondere die Zement-Komponenten und die Zusatzstoffe, werden unter Rühren zugegeben. Durch das Rühren wird eine Homogenisierung der Masse erreicht, die das Aufschäumen erleichtert.

Gemäß einer weiteren bevorzugten Ausführungsform werden in Schritt b) die flüssigen Bestandteile, insbesondere das Wasser und die Polymerdispersion, und die pulverförmigen Bestandteile, insbesondere die Zement-Komponenten und die Zusatzstoffe getrennt voneinander vorgemischt, dann vereint und unter Rühren homogenisiert. Durch das getrennte Vormischen der flüssigen und festen Komponenten kann eine noch bessere Homogenisierung der Masse erreicht werden.

Das Aufschäumen der Zusammensetzung bzw. der Rührprozess kann in einem leistungsgeregeltem Rühr- und/oder Mischaggregat, wie beispielsweise einem Buffalo-Mischer oder einem Schnellrührsystem mit Schneebesen-Einsatz, durchgeführt werden. Alternativ können maschinengestützte Schaumgeneratoren, wie beispielsweise das Modell "Pico Mix XL" des Herstellers Hansa Industrie-Mixer GmbH & Co.KG verwendet werden.

In Schritt c) werden geschäumte und/oder geblähte Polymer-Partikel bereitgestellt und mit der aufgeschäumten Zusammensetzung gemischt. Durch Bereitstellung geschäumter und/oder geblähter Polymer-Partikel werden luftporenhaltige und damit sehr gut wärmedämmende Leichtfüllstoffe eingebracht. Da die Polymer-Partikel beim Schäumen bzw. Blähen expandieren, können Gewicht und Rohstoffkosten weiter minimiert werden.

Bevorzugt werden in Schritt c) geschäumte und/oder geblähte Polymer-Partikel aus Polystyrol, Polyethylen, Polypropylen, Polycarbonat, Polyamid, Celluloseester, polymerer Milchsäure, Polyethylenterephtalat und/oder Polyethylenfuranoat bereitgestellt. Die angegebenen Polymere können auch als Co-Polymere, beispielsweise mit Polyester, ausgebildet sein. Alternativ oder ergänzend können auch Recyclate der vorstehend genannten Polymer-Partikel enthalten sein.

Ferner bevorzugt werden geschäumte und/oder geblähte Polymer-Partikel mit einer Schüttdichte < 50 kg/m³, weiter bevorzugt < 30 kg/m³ und besonders bevorzugt < 20 kg/m³ verwendet. Die Schüttdichte kann gemäß dem Fachbuch "Füllstoffe",2. Aufl., (dort Seiten 75 und 76) von Detlef Gysau mit Hilfe der Norm ISO 697 ermittelt werden. Bevorzugt weisen die Polymer-Partikel eine Kornrohdichte gemäß DIN EN 1097-6 von kleiner 100 kg/m³, vorzugsweise kleiner 80 kg/m³, weiterhin vorzugsweise kleiner 50 kg/m³ auf. Die mittlere Korngröße der geschäumten und/oder geblähten Polymer-Partikel beträgt vorzugsweise 0,1 - 10,0 mm, weiterhin vorzugsweise 1,0 - 8,0 mm, besonders bevorzugt 2,0 - 7,0 mm.

Polymer-Partikelschäume aus den vorstehend genannten Polymeren werden in der Regel der Brandklasse "normal entflammbar" zugeordnet. Dadurch, dass nach dem vorgeschlagenen Verfahren die geschäumten und/oder geblähten Polymer-Partikel mit der aufgeschäumten Zusammensetzung gemischt werden, kann das Brandverhalten des nach dem Verfahren hergestellten Dämmelements deutlich verbessert werden. Je nach Verteilung der Gewichtsanteile kann Nichtbrennbarkeit oder zumindest eine hohe Flammwidrigkeit erreicht werden.

Zur Verbesserung des Brandverhaltens des nach dem Verfahren hergestellten Dämmelements wird daher vorgeschlagen, dass in Schritt c) 1 - 50 Gew.-%, vorzugsweise 5 - 40 Gew.-%, weiterhin vorzugsweise 10 - 30 Gew.-% geschäumte und/oder geblähte Polymer-Partikel mit 50 - 99 Gew.-%, vorzugsweise 60 - 95 Gew.-%, weiterhin vorzugsweise 70 - 90 Gew.-% der aufgeschäumten Zusammensetzung jeweils bezogen auf das Gesamtgewicht der Ausgangsstoffe zur Herstellung des Dämmelements gemischt werden. Je höher der Gewichtsanteil der aufgeschäumten Zusammensetzung ist, desto besser ist das Brandverhalten, was auf die im Bindemittelsystem enthaltenen mineralischen Bindemittelkomponenten zurückzuführen ist. Allerdings wirkt sich ein zu hoher Gewichtsanteil nachteilig auf die Wärmedämmeigenschaften des nach dem Verfahren hergestellten Dämmelement aus. Das Mischungsverhältnis muss daher so gewählt werden, dass ein optimaler Kompromiss zwischen Brandschutz und Wärmeschutz gefunden wird.

Die Mischung wird dann in Schritt d) in eine Form eingebracht. Die Form kann weitgehend beliebig gestaltet sein, so dass Dämmelemente in Sonderformen, beispielsweise in einer Winkelform oder dergleichen, herstellbar sind. Somit können Dämmelemente für bestimmte Einsatzbereiche hergestellt werden.

Das Trocknen und/oder Härten der in die Form eingebrachten Mischung in Schritt e) kann unter normalen Raumbedingungen oder bei erhöhter Temperatur durchgeführt werden, um beispielsweise den Prozess zu beschleunigen. Der Trocknungs- und/oder Härtungsprozess beinhaltet das Abbinden der zementösen Bestandteile. Um sicherzustellen, dass diese vollständig abgebunden sind, kann nach dem Trocknen und/oder Härten sowie dem Ausformen noch eine Reifezeit eingehalten werden.

Der Formgebungsprozess nach dem vorgeschlagenen Verfahren ist vergleichsweise einfach, da außer der Form keine weiteren Werkzeuge oder Apparate benötigt werden. Insbesondere kann auf den Einsatz eines Autoklavs verzichtet werden, der die Herstellungskosten deutlich in die Höhe treiben würde. Der Verzicht auf den Einsatz eines Autoklavs spart zudem Energie ein. Des Weiteren wird mit dem Verzicht auf den Einsatz eines Autoklavs ein Produktionsengpass eliminiert.

Das nach dem vorgeschlagenen Verfahren hergestellte Dämmelement ist somit nicht nur einfach und kostengünstig herstellbar, sondern weist darüber hinaus erstaunliche Eigenschaften auf. Denn es ist nichtbrennbar oder zumindest schwerentflammbar, ohne brennendes Abtropfen oder Abfallen von Bestandteilen. Zudem weist es sehr gute Wärmedämmeigenschaften auf, da eine Wärmeleitfähigkeit λ < 0,40 W/(m*K) erreichbar ist. Als weitere Vorteile sind eine vergleichsweise geringe Wasseraufnahme, eine reduzierte Rohdichte und damit ein geringes Gewicht zu nennen. Darüber hinaus weist das nach dem Verfahren hergestellte Dämmelement verbesserte mechanische Eigenschaften, insbesondere eine geringere Sprödigkeit und Bruchanfälligkeit, auf.

Die Vorteile des nach dem vorgeschlagenen Verfahren hergestellten Dämmelements treten insbesondere bei einer Anwendung als Dämmplatte in einem Wärmedämmverbundsystem hervor. Denn aufgrund der Nichtbrennbarkeit bzw. hohen Flammwidrigkeit und der kostengünstigen Herstellung kann das Dämmelement großflächig, das heißt auf der gesamten Fassadenfläche eingesetzt werden. Durch die stark reduzierte Bruchanfälligkeit des Dämmelements wird zudem die Haftung zwischen dem Dämmelement und einem Kleber verbessert, mittels dessen das Dämmelement auf einem bauseitigen Untergrund angebracht ist. Baustellenseitig kann somit ggf. auf eine aufwendige Spezialverdübelung und/oder sonstige Sicherungsmaßnahmen verzichtet werden.

Das erfindungsgemäße Verfahren wird nachfolgend anhand konkreter Beispiele näher erläutert. Die Eigenschaften der nach diesen Beispielen hergestellten Dämmelemente wurden anschließend getestet und verglichen.

### Beispiel 1 (erfindungsgemäß)

Zur Herstellung der aufgeschäumten Zusammensetzung wurden folgende Ausgangsstoffe verwendet:

| | |
|---|---|
| 20,0 Gew.-% | organisches Polymerbindemittel (Polymerdispersion, Feststoff ca. 50%) |
| 25,0 Gew.-% | Portlandzement (CEM I 52,5 R) |
| 8,0 Gew.-% | amorpher Calciumaluminatzement |
| 10,0 Gew.-% | Tonerdezement |
| 27,5 Gew.-% | Wasser |
| 1,5 Gew.-% | Luftporenbildner (anionische Tenside) |
| 7,0 Gew.-% | Schaumstabilisatoren (modifiziertes kolloidales Kieselsol) |
| 1,0 Gew.-% | Hydrophobierungsmittel (Ca-Stearat) |
| 100 Gew.-% | |

Das Gesamtgewicht der Ausgangsstoffe betrug 2000 g. Zur Herstellung der aufgeschäumten Zusammensetzung wurden die Polymerdispersion und das Wasser vorgelegt und dispergiert. Unter Rühren wurden die pulverförmigen Bestandteile zugegeben, und zwar erst die Zement-Komponenten, dann die Zusatzstoffe. Anschließend wurde die gesamte Mischung mit Hilfe eines Buffalo-Mischers mit Schneebesen-Einsatz bis zur geforderten Nass-Schaumdichte von 250 g/L gerührt.

In einem Beispiel 1A wurden zur Herstellung des Dämmelements 65 Gew.-% der aufgeschäumten Zusammensetzung mit 35 Gew.-% expandierter Polystyrol-Partikel (Lambdapor 750 Standard der Firma Sunpor Kunststoff GmbH, Schüttdichte 16-17 kg/m³) gemischt.

Dabei wurde wie folgt vorgegangen:
In einem 18 Liter-Eimer wurden 130 g expandierte Polystyrol-Partikel vorgelegt. Mit einem Gummischaber wurde vorsichtig bis zum angegebenen Mischungsverhältnis die zuvor hergestellte aufgeschäumte Zusammensetzung untergehoben und vermengt. Danach wurde die Mischung in eine Form aus Polystyrol-Schaum mit der Abmessung 30 cm x 20 cm x 6 cm eingefüllt. Die Form wurde dabei überfüllt, so dass etwa 1 cm der Mischung über die Form ragte. Anschließend wurde ein Deckel auf die Form gepresst und die Form geschlossen. Die geschlossene und verspannte Form wurde dann bei 50°C im Umluftofen für 24 Stunden getrocknet bzw. ausgehärtet. Danach konnte das fertige Dämmelement ausgeformt werden.

In weiteren Beispielen, die nachfolgend als Beispiele 1B bis 1E, bezeichnet werden, wurde analog vorgegangen. Lediglich das Mischungsverhältnis wurde variiert, wie nachfolgende Tabelle zeigt:

| Beispiel | Aufgeschäumte Zusammensetzung [Gew.-%] | expandierte Polystyrol-Partikel [Gew.-%] |
|---|---|---|
| 1A | 65 | 35 |
| 1B | 80 | 20 |
| 1C | 85 | 15 |
| 1D | 90 | 10 |
| 1E | 100 | 0 |

Die Eigenschaften der nach den Beispielen 1A bis 1E hergestellten Dämmelemente sind der nachfolgenden Tabelle zu entnehmen:

| Beispiel | Rohdichte n. EN 1602 [kg/m³] | Wärmeleitfähigkeit n. EN12667 [mW/(m^{∗}K)] | Wasseraufnahme n. EN 1609 [kg/m²] | Druckfestigkeit n. EN 826 [kPa] |
|---|---|---|---|---|
| 1A | 34,8 | 32,69 | 0,43 | 48,4 |
| 1B | 52,6 | 35,4 | 0,83 | 123,0 |
| 1C | 73,5 | 37,19 | 0,83 | 134,6 |
| 1D | 80,4 | 39,03 | 0,55 | 58,1 |
| 1E | 136,0 | 42,9 | 1,20 | 84,4 |

Die Tabelle zeigt, dass sich mit zunehmendem mineralischem Anteil und einhergehendem abnehmendem Anteil der expandierten Polystyrol-Partikel die Rohdichten und - korrelierend dazu - die Wärmeleitfähigkeiten steigen. Das heißt, dass sich die Wärmedämmeigenschaften verschlechtern.

### Beispiel 2 (nicht erfindungsgemäß)

Im Unterschied zum Beispiel 1 wurde die hergestellte Zusammensetzung nicht aufgeschäumt.

Zur Herstellung der Zusammensetzung wurden folgende Ausgangsstoffe verwendet (analog Beispiel 1):

| | |
|---|---|
| 20,0 Gew.-% | organisches Polymerbindemittel (Polymerdispersion, Feststoff |
| | ca. 50%) |
| 25,0 Gew.-% | Portlandzement (CEM I 52,5 R) |
| 8,0 Gew.-% | amorpher Calciumaluminatzement |
| 10,0 Gew.-% | Tonerdezement |
| 27,5 Gew.-% | Wasser |
| 1,5 Gew.-% | Luftporenbildner (anionische Tenside) |
| 7,0 Gew.-% | Schaumstabilisatoren (modifiziertes kolloidales Kieselsol) |
| 1,0 Gew.-% | Hydrophobierungsmittel (Ca-Stearat) |
| 100 Gew.-% | |

Das Gesamtgewicht der Ausgangsstoffe betrug 2000 g. Zur Herstellung der Zusammensetzung wurden die Polymerdispersion und das Wasser vorgelegt und dispergiert. Unter Rühren wurden die pulverförmigen Bestandteile zugegeben, und zwar erst die Zement-Komponenten, dann die Zusatzstoffe. Im Unterschied zum Beispiel 1 wurde die Zusammensetzung nicht aufgeschäumt.

In einem Beispiel 2A wurden zur Herstellung des Dämmelements 65 Gew.-% der (nicht aufgeschäumten) Zusammensetzung mit 35 Gew.-% expandierter Polystyrol-Partikel (Lambdapor 750 Standard der Firma Sunpor Kunststoff GmbH, Schüttdichte 16-17 kg/m³) gemischt.

Dabei wurde wie folgt vorgegangen:
In einem 18 Liter-Eimer wurden 130 g expandierte Polystyrol-Partikel vorgelegt. Mit einem Gummischaber wurde vorsichtig bis zum angegebenen Mischungsverhältnis die zuvor hergestellte, nicht aufgeschäumte Zusammensetzung untergehoben und vermengt. Danach wurde die Mischung in eine Form aus Polystyrol-Schaum mit der Abmessung 30 cm x 20 cm x 6 cm eingefüllt. Die Form wurde dabei überfüllt, so dass etwa 1 cm der Mischung über die Form ragte. Anschließend wurde ein Deckel auf die Form gepresst und die Form geschlossen. Die geschlossene und verspannte Form wurde dann bei 50°C im Umluftofen für 24 Stunden getrocknet bzw. ausgehärtet. Danach konnte das fertige Dämmelement ausgeformt werden.

In weiteren Beispielen, die nachfolgend als Beispiele 2B bis 2E, bezeichnet werden, wurde analog vorgegangen. Lediglich das Mischungsverhältnis wurde variiert, wie nachfolgende Tabelle zeigt:

| Beispiel | nicht aufgeschäumte Zusammensetzung [Gew.-%] | expandierte Polystyrol-Partikel [Gew.-%] |
|---|---|---|
| 2A | 65 | 35 |
| 2B | 80 | 20 |
| 2C | 85 | 15 |
| 2D | 90 | 10 |
| 2E | 100 | 0 |

Die Eigenschaften der nach den Beispielen 2A bis 2E hergestellten Dämmelemente sind der nachfolgenden Tabelle zu entnehmen:

| Beispiel | Rohdichte n. EN 1602 [kg/m³] | Wärmeleitfähigkeit n. EN12667 [mW/(m^{∗}K)] | Wasseraufnahme n. EN 1609 [kg/m²] | Druckfestigkeit n. EN 826 [kPa] |
|---|---|---|---|---|
| 2A | 33,6 | 37,05 | 0,42 | 41,7 |
| 2B | 52,2 | 36,97 | 0,69 | 73,1 |
| 2C | 89,4 | 39,29 | 1,24 | 195,2 |
| 2D | 114,1 | 55,76 | 1,21 | 198,1 |
| 2E | 601,4 | 83,48 | 4,60 | - |

Die Tabelle zeigt auch hier, dass sich mit zunehmendem mineralischem Anteil und einhergehendem abnehmendem Anteil der expandierten Polystyrol-Partikel die Rohdichten und - korrelierend dazu - die Wärmeleitfähigkeiten steigen. Das heißt, dass sich die Wärmedämmeigenschaften verschlechtern.

Vergleicht man die Testergebnisse des Beispiels 1 mit denen des Beispiels 2, erkennt man jedoch deutlich, dass dieser Effekt gemindert wird, wenn die die mineralischen Bindemittelkomponenten enthaltende Zusammensetzung zuvor aufgeschäumt wird.

Bei einem Mischungsverhältnis 90 Gew.-% Zusammensetzung und 10 Gew.-% expandierte Polystyrol-Partikel (Beispiele 1D und 2D) fällt auf, dass die Wärmeleitfähigkeit des Dämmelements nach Beispiel 1D nach wie vor niedrig ist, während das Dämmelement nach Beispiel 2D eine Wärmeleitfähigkeit aufweist, die im Bereich der einer mineralischen Vergussmasse mit Leichtfüllstoffen liegt.

Ab einem Mischungsverhältnis von 80 Gew.-% Zusammensetzung und 20 Gew.-% expandierte Polystyrol-Partikel (ab den Beispielen 1B und 2B) erkennt man bereits optisch eine stabile Schaumstruktur der die expandierten Polystyrol-Partikel bindenden aufgeschäumten Zusammensetzung.

Völlig unerwartet war der Befund, dass die Wasseraufnahme der Dämmelemente nach Beispiel 1 - mit Ausnahme des Beispiels 1E - immer unter 1 kg/m³ geblieben ist und die Wasseraufnahme der Dämmelemente nach Beispiel 2 deutlich über den Werten der Dämmelemente nach Beispiel 1 lag.

Ferner wurde das Brandverhalten bzw. das Verhalten bei Beflammung der nach den Beispielen 1 und 2 hergestellten Dämmelemente getestet. Beflammungsversuche haben gezeigt, dass mit zunehmendem Anteil der Zusammensetzung, das heißt mit zunehmendem Anteil der mineralischen Bindemittelkomponenten, und abnehmendem Anteil der expandierten Polystyrol-Partikel die Flammwidrigkeit der Dämmelemente steigt.

Nicht zu erwarten war der Befund, dass die nach dem Beispiel 1 hergestellten Dämmelemente länger der Beflammung standhielten als die nach dem Beispiel 2 hergestellten Dämmelemente. Da das Brandverhalten von der angreifbaren Oberfläche abhängt, hätte es sich genau umgekehrt verhalten müssen. Denn die nach dem Beispiel 2 hergestellten Dämmelemente wiesen aufgrund der fehlenden Schaumstruktur der die expandierten Polystyrol-Partikel bindenden Zusammensetzung und der damit einhergehenden höheren Rohdichte weniger Angriffsfläche auf.

## Patentansprüche

1. Verfahren zur Herstellung eines Dämmelements, umfassend die Schritte:
a) Bereitstellen einer Zusammensetzung, enthaltend
- ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
- Wasser sowie
- Zusatzstoffe, die Luftporenbildner, Schaumstabilisatoren und Hydrophobierungsmittel umfassen,
b) Aufschäumen der Zusammensetzung, vorzugsweise mit Hilfe eines Rühr- und/oder Mischaggregats,
c) Bereitstellen vorgeschäumter Polymer-Partikel und Mischen der geschäumten und/oder geblähter Polymer-Partikel mit der aufgeschäumten Zusammensetzung,
d) Eingeben der Mischung aus aufgeschäumter Zusammensetzung und geschäumter und/oder geblähter Polymer-Partikel in eine Form und
e) Trocknen und/oder Härten der aufgeschäumten Zusammensetzung.

2. Verfahren nach Anspruch 1,
**dadurch gekennzeichnet, dass** in Schritt a) eine Zusammensetzung bereitgestellt wird, die zusätzlich Tonerdezement und/oder ein Sulfatträger, vorzugsweise CaSO4, enthält.

3. Verfahren nach Anspruch 1 oder 2,
**dadurch gekennzeichnet, dass** in Schritt a) eine Zusammensetzung bereitgestellt wird, die
- 1 - 45 Gew.-% Polymerbindemittel,
- 1 - 50 Gew.-% Portlandzement,
- 0,5 - 30 Gew.-% amorpher Calciumaluminatzement,
- 0 - 35 Gew.-% Tonerdezement,
- 0 - 20 Gew.-% Sulfatträger
- 20 - 40 Gew.-% Wasser,
- 0,01 - 5,0 Gew.-% Luftporenbildner,
- 0,1 - 20,0 Gew.-% Schaumstabilisatoren,
- 0,01 - 5,0 Gew.-% Hydrophobierungsmittel,
- 0 - 35 Gew.-% weitere Additive
jeweils bezogen auf das Gesamtgewicht der Ausgangsstoffe der Zusammensetzung enthält.

4. Verfahren nach einem der vorhergehenden Ansprüche,
**dadurch gekennzeichnet, dass** in Schritt a) ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, bevorzugt Copolymere aus Vinylacetat-Ethylen, Acrylsäureester-Acrylnitril, Acryl-/Methacrylsäureester, Styrol-Butylacrylat und/oder Acrylat-Homopolymer als organische Bindemittelkomponente verwendet wird.

5. Verfahren nach einem der vorhergehenden Ansprüche,
**dadurch gekennzeichnet, dass** in Schritt a) eine Zusammensetzung bereitgestellt wird, die Luftporenbildner aus der Gruppe der anionischen Tenside, vorzugsweise anionische Tenside auf Basis von Fettsäurederivaten, insbesondere Laurylethersulfaten oder Oleinsulfonaten, als Zusatzstoff enthält.

6. Verfahren nach einem der vorhergehenden Ansprüche,
**dadurch gekennzeichnet, dass** in Schritt a) eine Zusammensetzung bereitgestellt wird, die Schaumstabilisatoren aus der Gruppe kolloidales Kieselsol, insbesondere amorphes kolloidales Kieselsol oder epoxysilanmodifizierte kolloidale Kieselerde, Alkohole, Glycole, beispielsweise Ethylenglycol, Glycolether, beispielsweise Butylglycol, Butyldiglycol und Propylenglycol-monoalkylether, oder Polyglycolether, insbesondere Polyethylenglycolmonoalkylether, bevorzugt amorphes kolloidales Kieselsol oder epoxysilanmodifizierte kolloidale Kieselerde, als Zusatzstoff enthält.

7. Verfahren nach einem der vorhergehenden Ansprüche,
**dadurch gekennzeichnet, dass** in Schritt a) eine Zusammensetzung bereitgestellt wird, die Hydrophobierungsmittel aus der Gruppe der Alkali- und Erdalkaliseifen langkettiger Fettsäuren wie Oleate, Stearate oder Laurate, Silikonharze oder Polysiloxane als Zusatzstoff enthält.

8. Verfahren nach einem der vorhergehenden Ansprüche,
**dadurch gekennzeichnet, dass** in Schritt b) die Zusammensetzung gerührt wird, bis eine Nass-Schaumdichte < 600 g/L, vorzugsweise < 500 g/L, weiterhin vorzugsweise < 300 g/L, erreicht ist.

9. Verfahren nach einem der vorhergehenden Ansprüche,
**dadurch gekennzeichnet, dass** in Schritt b) die flüssigen Bestandteile, insbesondere das Wasser und die Polymerdispersion, vorgelegt werden und die pulverförmigen Bestandteile, insbesondere die Zement-Komponenten und die Zusatzstoffe, unter Rühren zugegeben werden.

10. Verfahren nach einem der Ansprüche 1 bis 8,
**dadurch gekennzeichnet, dass** in Schritt b) die flüssigen Bestandteile, insbesondere das Wasser und die Polymerdispersion, und die pulverförmigen Bestandteile, insbesondere die Zement-Komponenten und die Zusatzstoffe getrennt voneinander vorgemischt, dann vereint und unter Rühren homogenisiert werden.

11. Verfahren nach einem der vorhergehenden Ansprüche,
**dadurch gekennzeichnet, dass** in Schritt c) geschäumte und/oder geblähte Polymer-Partikel aus Polystyrol, Polyethylen, Polypropylen, Polycarbonat, Polyamid, Celluloseester, polymerer Milchsäure, Polyethylenterephtalat und/oder Polyethylenfuranoat bereitgestellt werden.

12. Verfahren nach einem der vorhergehenden Ansprüche,
**dadurch gekennzeichnet, dass** in Schritt c) 1 - 50 Gew.-%, vorzugsweise 5 - 40 Gew.-%, weiterhin vorzugsweise 10 - 30 Gew.-% geschäumte und/oder geblähte Polymer-Partikel mit 50 - 99 Gew.-%, vorzugsweise 60 - 95 Gew.-%, weiterhin vorzugsweise 70 - 90 Gew.-% der aufgeschäumten Zusammensetzung jeweils bezogen auf das Gesamtgewicht der Ausgangsstoffe zur Herstellung des Dämmelements gemischt werden.

13. Verfahren nach einem der vorhergehenden Ansprüche,
**dadurch gekennzeichnet, dass** das Trocknen und/oder Härten in Schritt e) unter normalen Raumbedingungen oder bei erhöhter Temperatur durchgeführt wird.
